(19) Europäisches Patentamt
European Patent Office
Office européen des brevets

(11) **EP 3 528 553 B1**

(12) **EUROPEAN PATENT SPECIFICATION**

(45) Date of publication and mention
of the grant of the patent:
**12.01.2022 Bulletin 2022/02**

(51) Int Cl.:
*H04W 76/28* ^(2018.01)   *H04B 7/06* ^(2006.01)
*H04B 7/08* ^(2006.01)

(21) Application number: **17866706.9**

(22) Date of filing: **03.11.2017**

(86) International application number:
**PCT/CN2017/109388**

(87) International publication number:
**WO 2018/082675 (11.05.2018 Gazette 2018/19)**

(54) **WIRELESS COMMUNICATION METHOD AND APPARATUS**

DRAHTLOSKOMMUNIKATIONSVERFAHREN UND -VORRICHTUNG

PROCÉDÉ ET APPAREIL DE COMMUNICATION SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.11.2016 CN 201610959206**

(43) Date of publication of application:
**21.08.2019 Bulletin 2019/34**

(73) Proprietor: **Huawei Technologies Co., Ltd.
Longgang District
Shenzhen, Guangdong 518129 (CN)**

(72) Inventors:
• **HU, Xingxing
  Shenzhen
  Guangdong 518129 (CN)**
• **LIU, Dong
  Shenzhen
  Guangdong 518129 (CN)**
• **DENG, Tianle
  Shenzhen
  Guangdong 518129 (CN)**

(74) Representative: **Thun, Clemens
  Mitscherlich PartmbB
  Patent- und Rechtsanwälte
  Sonnenstraße 33
  80331 München (DE)**

(56) References cited:
  WO-A2-2014/172306      CN-A- 101 606 335
  CN-A- 102 780 538      CN-A- 105 981 447

US-A1- 2008 101 268     US-A1- 2014 226 650

• HUAWEI ET AL: "UE power saving mechanism in High Frequency", 3GPP DRAFT; R2-166912, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Kaohsiung; 20161010 - 20161014 9 October 2016 (2016-10-09), XP051151346, Retrieved from the Internet: URL:http://www.3gpp.org/ftp/Meetings_3GPP_SYNC/RAN2/Docs/ [retrieved on 2016-10-09]
• HUAWEI ET AL: "UE power saving mechanism considering beamforming", 3GPP DRAFT; R2-1705119, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Hangzhou, China; 20170515 - 20170519 14 May 2017 (2017-05-14), XP051275595, Retrieved from the Internet: URL:http://www.3gpp.org/ftp/Meetings_3GPP_SYNC/RAN2/Docs/ [retrieved on 2017-05-14]

- HUAWEI ET AL: "Consideration on DRX with beam management", 3GPP DRAFT; R2-1708696 CONSIDERATION ON DRX WITH BEAM MANAGEMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANC , vol. RAN WG2, no. Berlin, Germany; 20170821 - 20170825 20 August 2017 (2017-08-20), XP051318502, Retrieved from the Internet: URL:http://www.3gpp.org/ftp/Meetings_3GPP_SYNC/RAN2/Docs/ [retrieved on 2017-08-20]

**Description**

**TECHNICAL FIELD**

The present invention relates to the field of mobile communications, and in particular, to a discontinuous reception (Discontinuous Reception, DRX for short) technology in a wireless communications system.

**BACKGROUND**

Packet communication features burstiness. To be specific, after occasional sending of a packet, a communication silent state usually lasts for a relatively long time. Therefore, if a terminal device (also as user equipment, UE) always listens to a downlink control channel of each subframe regardless of whether there is data, a receiver circuit of the UE is always in an enabled state. This causes relatively large power consumption.

To reduce this part of power consumption of the UE, a DRX technology is used in a Long Term Evolution (long term evolution, LTE) system. A base station configures a DRX cycle for the UE. In each DRX cycle, the UE is in an active period (On Duration) only in a specific subframe or several specific subframes, and listens to downlink control channels of these subframes, and the UE is in a sleep state in remaining subframes, to reduce power consumption of the UE.

Different from a low-frequency omnidirectional antenna communication manner used by an LTE base station, a directional beamforming communication manner is used for high-frequency communication due to a relatively great path loss of the high-frequency communication. Therefore, coverage of the high-frequency communication is different from a coverage area of an omnidirectional antenna. If a DRX mechanism of the LTE is still used directly, the UE may receive data from the base station at a moment before On Duration. However, due to possible displacement or receiving direction rotation in a sleep period of the UE, when the UE wakes up next time, a receive beam of the UE and a transmit beam of the base station do not match any more. This causes a communication failure.

The prior art document "UE power saving mechanism in High Frequency", Huawei et. al., 3GPP draft, 9. October 2016 refers to an UE power saving mechansim for high frequencies.

**SUMMARY**

This specification describes a DRX cycle management method, a terminal device, a chip and a computer-readable storage medium, to implement better balance between system performance and power consumption of UE.

This problem is solved by the subject matter of the independent claims. Further implemenation forms are provided in the dependent claims.

Compared with the prior art, in the solutions provided in the present invention, a DRX cycle may be more flexibly managed, to implement better balance between system performance and power consumption of UE.

**BRIEF DESCRIPTION OF DRAWINGS**

FIG. 1 is a schematic diagram of a possible system network for implementing the present invention;
FIG. 2 is a schematic diagram of a possible application scenario according to the present invention;
FIG. 3 is a schematic diagram of one DRX cycle;
FIG. 4 is a schematic flowchart of a wireless communication method according to an embodiment of the present invention;
FIG. 5 is a schematic diagram of a frame structure in a wireless communication method according to an embodiment of the present invention;
FIG. 6 is a schematic diagram of a frame structure in a wireless communication method according to an example not covered by the claims;
FIG. 7 is a schematic flowchart of a wireless communication method according to an example not covered by the claims;
FIG. 8 is a schematic diagram of a frame structure in a wireless communication method according to an example not covered by the claims;
FIG. 9 is a schematic diagram of a cycle structure in a wireless communication method according to an example not covered by the claims; and
FIG. 10 is a schematic structural diagram of a terminal device according to an embodiment of the present invention.

**DESCRIPTION OF EMBODIMENTS**

The technical solutions in the embodiments of the present invention are clearly and completely described in the following with reference to the accompanying drawings. Apparently, the described embodiments are merely some but not all of the embodiments of the present invention. All other embodiments obtained by a person of ordinary skill in the art based on the embodiments of the present invention without creative efforts shall fall within the protection scope of the present invention.

A network architecture and a service scenario are described in the embodiments of the present invention to describe the technical solutions in the embodiments of the present invention more clearly, and but not constitute a limitation on the technical solutions in the embodiments of the present invention. A person of ordinary skill in the art may learn that with evolution of network architectures and appearance of new service scenarios, the technical solutions in the embodiments of the present invention are also applicable to a similar technical problem.

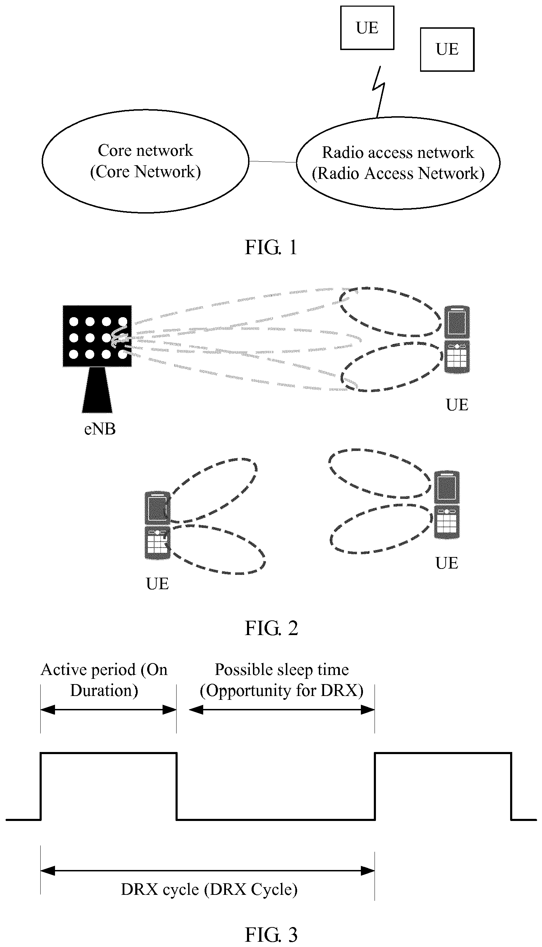

As shown in FIG. 1, user equipment UE accesses a radio access network (Radio Access Network, RAN). Technologies described in the present invention are applicable to a Long Term Evolution LTE system, or other wireless communications systems using various radio access technologies, for example, systems using access technologies such as Code Division Multiple Access, Frequency Division Multiple Access, Time Division Multiple Access, orthogonal frequency division multiple access, or single carrier frequency division multiple access. In addition, the technologies may be further applicable to a subsequent evolved system using an LTE system, for example, a 5th Generation 5G system. For clarity, the LTE system is merely used as an example herein for description.

In this application, nouns "network" and "system" are often interchanged for use, but a person skilled in the art may understand meanings of the nouns. User equipment UE in this application may include a handheld device, an in-vehicle device, a wearable device, or a computing device that provides a wireless communication function; another processing device connected to a wireless modem; and user equipment (User Equipment, UE), a mobile station (Mobile Station, MS for short), a terminal (terminal), a terminal device (Terminal Equipment), and the like in various forms. For ease of description, in this application, the foregoing devices are collectively referred to as user equipment (UE). The radio access network device in the present invention is an apparatus that is configured to provide a wireless communication function for the UE and that is deployed in a radio access network. The radio access network device may include base stations in various forms, such as a macro base station, a micro base station, a relay station, and an access point. In systems that use different radio access technologies, a device that has a function of a base station may have different names. For example, in an LTE network, the device is referred to as an evolved NodeB (evolved NodeB, eNB or eNodeB); in a 3rd generation 3G network, the device is referred to as a NodeB (NodeB); in a 5G system, the device is referred to as a gNB. For ease of description, in this application, all the foregoing apparatuses that provide a wireless communication function for the UE are referred to as a base station.

As mentioned in the background, due to a relatively large path loss in high-frequency communication, a directional beamforming communication manner is used. Because there are a plurality of directional beams, to implement normal communication, the beams need to be matched first. Assuming that a base station has M beams in a cell in which UE is located, and the UE has N beams (both M and N are positive integers greater than or equal to 1), when the UE and the base station perform pairing or beam training, a maximum of M*N times of measurement are needed. As shown in FIG. 2, UE has two beams, and a base station communicating with the UE has three beams. Therefore, the UE and the base station need to perform measurement a maximum of 2*3 times, to ensure normal communication. If the UE and the base station each have more beams, a quantity of beam measurement times also multiplies. This causes great power consumption of the UE. In addition, the UE further needs to report matched beams, so that the base station allocates radio resources. However, the UE performs beam training and reporting in each DRX cycle, to correctly receive data delivered by the base station, but the base station does not always send data to the UE each time after the UE performs beam training and reporting. Therefore, beam training and reporting/feedback before On Duration in which no data is received lead to a waste of power consumption.

FIG. 3 is a schematic diagram of one DRX cycle. The following gives a detailed description with reference to FIG. 3. In time domain, a time is divided into a plurality of consecutive DRX cycles (DRX Cycle). The DRX cycle is a cycle used to describe repeated occurrence of On Duration in a DRX mode. One DRX cycle includes an "On Duration" and an "Opportunity for DRX". In an On Duration time segment, the UE listens to a physical downlink control channel (Physical Downlink Control Channel, PDCCH), to receive downlink data. Therefore, the "On Duration" time segment may also be referred to as an active period. "Opportunity for DRX" is a possible sleep time. In this time segment, the UE disables a receiver, and the UE does not listen to the PDCCH, and does not receive data of a downlink channel, to reduce power consumption. Therefore, the "Opportunity for DRX" time segment may also be referred to as a dormant period.

An embodiment of the present invention provides a wireless communication method. The method may be applied to a multi-beam communications technology scenario shown in FIG. 2.

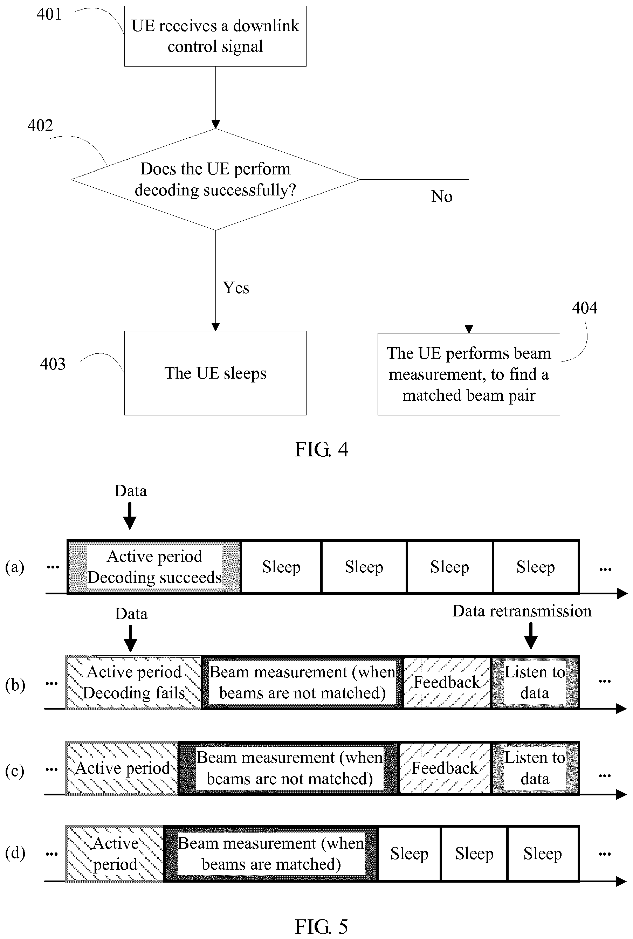

With reference to FIG. 4, the following describes, by using one DRX cycle as an example, a solution provided in an embodiment of the present invention.

S401: UE receives a downlink control signal sent by a base station.

S402: During On Duration, the UE first attempts to decode a downlink control channel, and selects a corresponding step based on a decoding result. For details, refer to four possible scenarios (a), (b), (c), and (d) in FIG. 5.

(1) When the base station has data to be sent to the UE, and the UE directly decodes the downlink control channel successfully when attempting to decode the downlink control channel in the On Duration, it indicates that the UE can normally communicate with the base station. The UE may directly sleep in other subframes in the DRX cycle, as shown in the scenario (a) in FIG. 5. In this case, decoding succeeds directly through an attempt, so that the UE can directly enter a dormant period, thereby greatly reducing overheads of the UE. In addition, the UE does not need to perform reporting/feedback to the base station, thereby saving air interface resources.

(2) When the base station has data to be sent to the UE, and the UE fails to decode the downlink control channel when attempting to decode the downlink control channel in the On Duration, or although the UE successfully decodes the downlink control channel in the On Duration, when attempting to decode a data channel indicated by the downlink control channel, the UE fails to decode the data channel, the UE needs to perform beam measurement, feed back a matched beam pair to the base station, and then monitor the downlink control channel to receive resent data, as shown in the scenario (b) in FIG. 5.

(3) When the base station has no data to be sent to the UE, and the UE fails to decode the downlink control channel when attempting to decode the downlink control channel in the On Duration, the UE performs beam measurement, feeds back a matched beam pair to the base station, and then continues to monitor and wait for a period of time (the UE does not know whether there is resent data), as shown in the scenario (c) in FIG. 5.

(4) When the base station has no data to be sent to the UE, and the UE fails to decode the downlink control channel when attempting to decode the downlink control channel in the On Duration, the UE always preferentially measures an original serving beam pair first. If the UE finds that the original serving beam still meets a use condition, the UE determines that there is no data currently, and directly sleeps, as shown in the scenario (d) in FIG. 5.

That the UE fails to decode the downlink control channel when decoding the downlink control channel may be caused for a plurality of reasons: For example, because the downlink control signal is too weak, the UE cannot correctly decode the downlink control channel. Alternatively, although the UE correctly receives the downlink control signal, because the downlink control signal is not intended for the UE, the UE cannot correctly decode the downlink control channel. That the UE fails to decode the downlink control channel may be understood as a parsing failure, or one or more parsing failures in a period of time.

The control channel and the data channel may use different serving beam pairs. After correctly decoding the downlink control channel, the UE further needs to correctly decode the data channel, to complete data communication. Therefore, when the base station has no data to be delivered to the UE, as shown in the foregoing cases (3) and (4), the UE does not need to measure a serving beam of the data channel. When the base station has to-be-delivered data, as shown in the foregoing case (2), although the UE correctly decodes the control channel, when decoding of the data channel fails, the UE needs to measure a serving beam of the data channel, to find a beam pair that meets a condition. For a specific implementation, refer to a beam measurement process of the control channel. When it is found, through measurement, that a beam pair that meets the condition and that is of the data channel is different from the original serving beam pair, the UE needs to report the beam pair of the data channel, so that the base station delivers data information by using the beam pair.

According to a delay requirement of service data, the UE may immediately receive downlink data or wait for a next DRX cycle to receive downlink data.

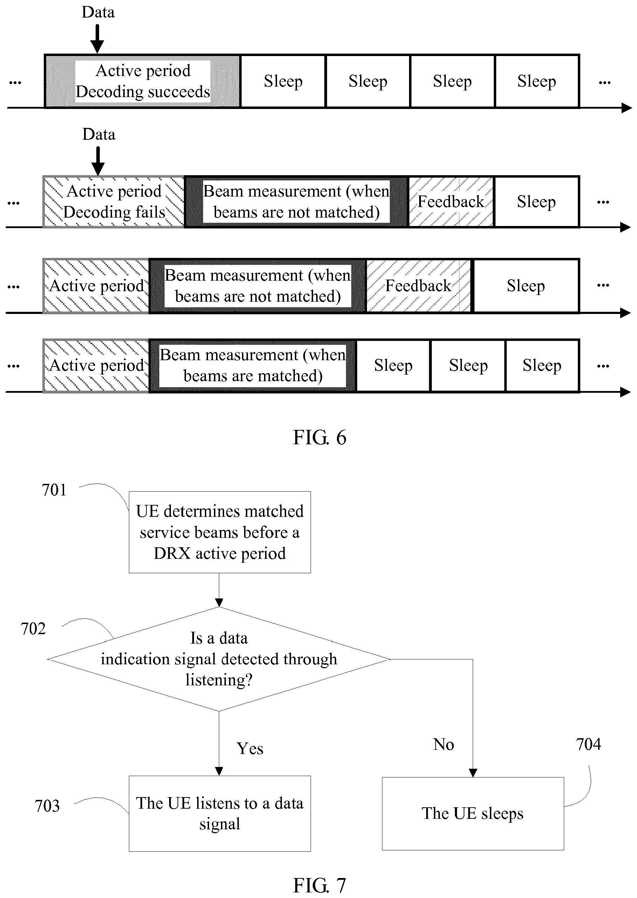

For a delay-insensitive scenario, the UE may choose to directly sleep after reporting matched beams, and wait for a next DRX cycle to receive data, as shown in FIG. 6, which is not covered by the claims.

In the foregoing scenarios (2), (3), and (4), the UE preferentially measures the original serving beam pair. When the original serving beam pair meets the use condition, the UE communicates with the base station by using the original serving beam. When the original serving beam pair is preferentially measured to determine whether the original serving beam pair meets the use condition, a beam pairing process and beam pairing overheads can be reduced. In addition, there is no need to perform reporting/feedback to the base station, thereby saving air interface resources. It should be noted that when the UE uses an omnidirectional antenna, the UE does not have a plurality of beams, or it may be understood that the UE has only one beam. In this case, the beam of the UE and one of a plurality of beams of the base station are construed as a beam pair. This specification is all described by using a concept of a beam pair.

Whether the original serving beam pair meets the use condition may be specifically determined in the following manners:

The UE calculates a measurement value of the original serving beam pair, where the measurement value may be beam signal strength, a beam signal signal-to-noise ratio, or a combination thereof, for example, may be an average value, a weighted average value, or the like of the two parameter measurement values. It should be understood that only two measurement parameters are given herein, and parameters that can be used as measurement values include but are not limited to the two parameters.

When the measurement value is higher than a preset threshold, it may be considered that the original serving beam pair meets the use condition. The preset threshold may be determined in the following manner:

The base station determines the preset threshold. For example, the base station may determine the threshold based on parameters such as a decoding capability of the UE, whether multi-antenna or single-antenna receiving is used, and a current data service type. After determining the preset threshold, the base station may deliver the preset threshold to the UE through system message broadcasting or by using a MAC CE. The UE may also determine the preset threshold. For a specific determining manner, refer to the manner of determining the preset threshold by the base station.

When the measurement value is lower than the preset threshold, the UE needs to perform beam measurement, search for another matched beam pair, and report/feed back the matched beam pair to the base station, so that the base station records the beam pair, and subsequently delivers a data signal to the UE by using the beam pair. For a manner of determining whether the another beam pair meets the use condition, refer to the foregoing manner of determining whether the original serving beam pair meets the use condition. Details are not described herein again.

When finding a beam pair that meets the use condition, the UE may stop performing further measurement on other remaining beam pairs, and report the found beam pair to the base station. Optionally, the UE may alternatively perform further measurement to find a beam pair that has a best condition. Measurement is stopped when the beam pair that meets the use condition is found, to reduce power consumption and overheads of the UE.

An example, not covered by the claims, further provides a wireless communication method. The method may be applied to a scenario in which a multi-beam communications technology is used. The following gives a detailed description with reference to FIG. 7.

S701: Before an active period in a DRX cycle, UE first performs beam measurement, to determine matched serving beams.

The UE preferentially measures an original serving beam, to determine whether the original serving beam meets a use condition. If the original serving beam does not meet the use condition, the UE determines, through measurement until a serving beam that can meet the use condition is found, whether another beam pair meets the use condition. For a specific implementation, refer to the detailed description in the previous embodiment.

S702: The UE listens to a data indication signal (data indicator), where the data indication signal is used to indicate whether there is data to be delivered to the UE, and the data indication signal may be represented by 1-bit data. For example, delivery of data 1 indicates that there is data to be delivered to the UE subsequently; and delivery of data 0 indicates that there is no data to be delivered to the UE subsequently. Alternatively, that the data indication signal is received indicates that there is data to be delivered to the UE, and that the data indication signal is not received indicates that there is no data to be delivered to the UE. Specific implementations include but are not limited thereto. The UE performs the following steps based on whether a data indication signal is detected through listening.

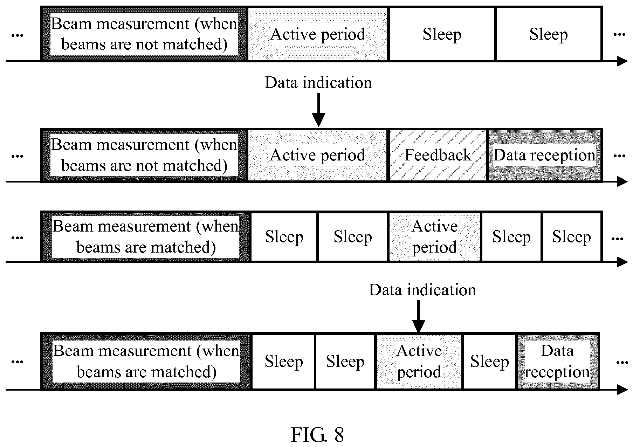

For details, refer to four possible scenarios (a), (b), (c), and (d) in FIG. 8.

(1) When a base station has no data to be sent to the UE, the UE performs beam measurement before the active period, to determine an available beam pair. As shown in the scenario (a) in FIG. 8, the UE finds, through measurement, that the original serving beam does not meet the use condition, and measures another beam pair to find an available serving beam. If the UE has not received the data indication signal, or the data indication signal indicates that there is no data to be delivered, the UE may directly sleep in other subframes in the DRX cycle. In this case, although the UE originally needs to continuously perform listening in the active period to determine whether there is data to be delivered, because the data indication signal is used to prompt the UE that there is no data to be delivered subsequently, the UE may directly enter a sleep state, and stay in the sleep state until a next DRX cycle, thereby greatly reducing overheads of the UE. If the UE performs beam measurement (beam training) before the active period, and finds that the original serving beam pair meets the use condition, the UE still does not need to perform reporting/feedback to the base station, thereby saving air interface resources and reducing power consumption.

(2) When the base station has data to be sent to the UE, the UE performs beam measurement before the active period, finds, through measurement, that the original serving beam does not meet the use condition, and measures another beam pair to find an available serving beam. After being prompted by using the data indication signal, the UE learns that there is data to be delivered subsequently, and the UE continuously listens to a channel. Before data delivery, the UE reports information about the determined available serving beam pair to the base station, as shown in the scenario (b) in FIG. 8.

(3) When the base station has no data to be sent to the UE, the UE performs beam measurement before the active period, and finds, through measurement, that the original serving beam meets the use condition, and after being prompted by using the data indication signal, the UE learns that there is no data to be delivered subsequently, as shown in the scenario (c) in FIG. 5, the UE may directly enter a sleep state. In this case, although the UE originally needs to continuously perform listening in the active period to determine whether there is data to be delivered, because the data indication signal is used to prompt the UE that there is no data to be delivered subsequently, the UE may directly enter a sleep state, and stay in the sleep state until a next DRX cycle, thereby greatly reducing overheads of the UE. Because the original serving beam is available, the UE still does not need to report an available serving beam pair to the base station.

(4) When the base station has data to be sent to the UE, the UE performs beam measurement before the active period, and finds, through measurement, that the original serving beam meets the use condition, and after being prompted by using the data indication signal, the UE learns that there is data to be delivered subsequently, as shown in a scenario (d) in FIG. 5. Because the original serving beam is available, the UE still does not need to report an available serving beam pair to the base station.

That the UE performs beam measurement before the active period may be understood as follows: The UE performs beam measurement before an active period in a DRX (to be specific, performs beam measurement in a dormant period), or the UE performs measurement in a period of time before an active period (On Duration) in a DRX cycle.

Optionally, a control channel and a data channel may use different serving beam pairs. After correctly decoding the downlink control channel, the UE further needs to correctly decode the data channel, to complete data communication. For a specific implementation, refer to description in the foregoing embodiment.

In this embodiment of the present invention, by using the data indication signal, the UE may know whether there is data to be delivered subsequently, to reduce listening overheads of the UE and radio resources consumption required for reporting.

The embodiments of the present invention further provide an embodiment, to redesign a beam measurement cycle based on the foregoing two embodiments.

Beam measurement and reporting may cause considerable power consumption. However, because movement and direction change of UE make a receive beam and a transmit beam unmatched, and the process of beam measurement and reporting is inevitable, a measurement frequency and a reporting frequency should be as low as possible in an acceptable range of a UE service.

An On Duration design in DRX cycle is based on burstiness of packet exchange, and is related to a packet receiving frequency. However, in an ideal case, beam measurement should be triggered when a receive beam and a transmit beam are unmatched, which is related to a movement speed and an orientation change speed of the UE. Therefore, a beam measurement cycle $T_b$ does not need to be the same as a DRX cycle $T_d$. On the contrary, a case in which $T_b$ is greater than $T_d$ is more beneficial to energy saving of the UE.

Therefore, a relationship between $T_b$ and $T_d$ is configured as follows:

$$T_b = N \times T_d$$
,

where

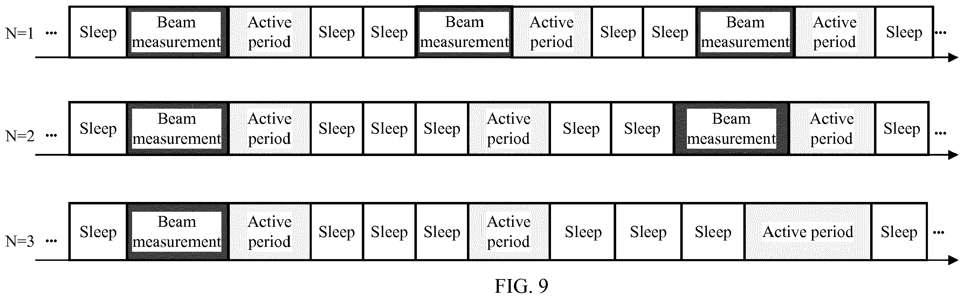

$N \geq 1$, N may be configured by the base station based on a service class of the UE and an environment in which the UE is located, and N may be dynamically configured by the base station depending on different scenarios in which the UE is located. FIG. 9 shows a schematic diagram in which N = 1, 2, 3.

Beam measurement always starts from an original service receive-transmit beam pair. If original service receive-transmit beams meet a use condition, the UE sleeps directly without reporting, and waits for an active period. Alternatively, if the original service receive-transmit beams do not meet a use condition, the UE needs to report new matched receive-transmit beams, and then listens to a downlink control channel in an active period.

The beam measurement cycle is redesigned to be different from the DRX cycle, so that the beam measurement cycle is greater than the DRX cycle. This is because not all DRX cycles include a process of measurement and reporting. Therefore, radio resource occupation and power consumption caused by beam measurement and reporting can be reduced.

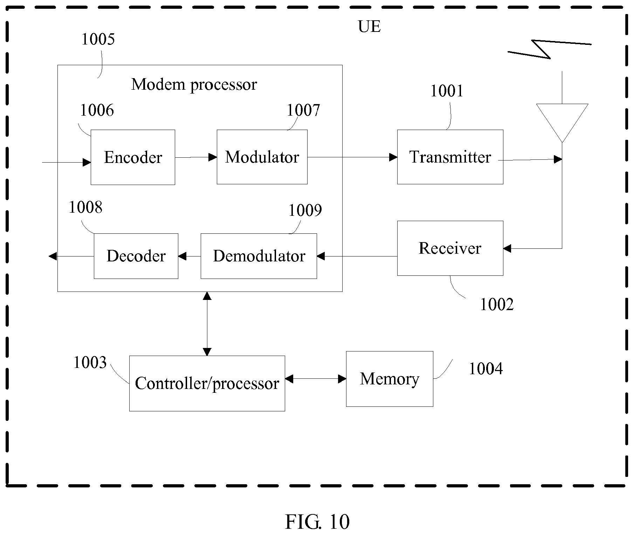

FIG. 10 is a simplified schematic diagram of a possible design structure of UE in the foregoing embodiments. The UE includes a transmitter 1001, a receiver 1002, a controller/processor 1003, a memory 1004, and a modem processor 1005.

The transmitter 1001 adjusts (for example, performs analog conversion, filtering, amplification, or up-conversion on) the output sampling and generates an uplink signal. The uplink signal is transmitted to the base station in the foregoing embodiments by using an antenna. On a downlink, the antenna receives a downlink signal transmitted by the base station in the foregoing embodiments. The receiver 1002 adjusts (for example, performs filtering, amplification, down-conversion, or digitalization on) a signal received from the antenna, and provides input sampling. In the modem processor 1005, an encoder 1006 receives service data and a signaling message that are to be sent on an uplink, and processes (for example, performs formatting, encoding, or interleaving on) the service data and the signaling message. A modulator 1007 further processes (for example, performs symbol mapping or modulation on) encoded service data and an encoded signaling message, and provides output sampling. A demodulator 1009 processes (for example, demodulates) the input sampling and provides a symbol estimation. A decoder 1008 processes (for example, performs de-interleaving and decoding on) the symbol estimation, and provides encoded data and an encoded signaling message that are sent to the UE. The encoder 1006, the modulator 1007, the demodulator 1009, and the decoder 1008 may be implemented by the composite modem processor 1005. These units perform processing according to radio access technologies (for example, access technologies of an LTE system and another evolved system) used by a radio access network.

The controller/processor 1003 controls and manages an action of the UE, and is configured to perform the processing performed by the UE in the foregoing embodiments. For example, the controller/processor 1003 is configured to control the UE to receive paging based on a received DRX long cycle and/or is configured to perform another process of a technology described in the present invention.

Method or algorithm steps described in combination with the content disclosed in the present invention may be implemented by hardware, or may be implemented by a processor executing a software instruction. The software instruction may be sent by a corresponding software module. The software module may be stored in a RAM, a flash memory, a ROM, an EPROM, an EEPROM, a register, a hard disk, a removable hard disk, a CD-ROM, or a storage medium of any other form known in the art. For example, a storage medium is coupled to a processor, so that the processor can read information from the storage medium, and can write information into the storage medium. Certainly, the storage medium may alternatively be a component of the processor. The processor and the storage medium may be located in an ASIC. In addition, the ASIC may be located in user equipment. Certainly, the processor and the storage medium may alternatively exist in the user equipment as discrete components.

A person skilled in the art should be aware that in the foregoing one or more examples, functions described in the present invention may be implemented by hardware, software, firmware, or any combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general-purpose or special-purpose computer.

The objectives, technical solutions, and beneficial effects of the present invention are further described in detail in the foregoing specific embodiments. It should be understood that the foregoing descriptions are merely specific implementations of the present invention, but are not intended to limit the protection scope of the present invention. Any modification, replacement, or improvement made based on the technical solutions of the present invention, as defined in the claims, shall fall within the protection scope of the present invention.

**Claims**

1. A wireless communication method, applied to a scenario in which a multi-beam communications technology is used, performed by a terminal device, the method comprising the following method steps performed during a single discontinuous reception, DRX, cycle:

    **a.)** during a first active period of the DRX cycle, receiving (S 401), by using a receive beam of a first beam pair among multiple beam pairs, a downlink control signal on a downlink control channel from a radio access network device, wherein the receive beam of the first beam pair is a current serving receive beam of the downlink control channel, wherein the first active period is a first On Duration of the DRX cycle,
wherein each beam pair among the multiple beam pairs is formed by a transmit beam of the access network device and a receive beam of the terminal device;
    **b.)** during the first active period of the DRX cycle, trying (S 402) to successfully decode the downlink control signal;

        **b1.)** if the terminal device has successfully decoded the downlink control information, determining that there are downlink data intended for the terminal device, and, during the first active period of the DRX cycle, receiving, by using a receive beam of a second beam pair among the multiple beam pairs, a downlink data signal comprising the downlink data on a downlink data channel, the downlink data channel being indicated by the downlink control information and the receive beam of the second beam pair being a current serving receive beam of the downlink data channel, and trying to successfully decode the received downlink data signal during the first active period of the DRX cycle;

            **b11.)** if the terminal device has successfully decoded the downlink data signal, entering in all subsequent subframes subsequent to the first active period of the DRX cycle into a sleep state until the end of the DRX cycle;
            **b12.)** if the terminal has not successfully decoded the downlink data signal, performing a beam measurement during a first time interval following the first active period, and determining, during the first time interval, whether a wireless communication quality of the second beam pair meets a preset condition,

                ▪ if the wireless communication quality of the second beam pair meets the preset condition, monitoring, during a second active period following the first time interval, the downlink control channel by using the receive beam of the first beam pair for receiving, during the second active period, the resent downlink data signal on the downlink data channel and receiving, during the second active period, the resent downlink data signal by using the receive beam of the second beam pair, wherein the second active period is a second On Duration of the DRX cycle;

   ■ if the wireless communication quality of the second beam pair does not meet the preset condition, determining, during the first time interval, a third beam pair among the multiple beam pairs for the downlink data channel whose wireless communication quality meets the preset condition, reporting, during a second time interval following the first time interval, information indicating the third beam pair to the radio access network device, and subsequently

monitoring, during the second active period following the second time interval, the downlink control channel by using the receive beam of the first beam pair for receiving the resent downlink data signal on the downlink data channel, and receiving, during the second active period, the resent downlink data signal by using a receive beam of the third beam pair, the receive beam of the third beam pair being a new serving receive beam of the downlink data channel;

**b2.)** if the terminal device has not successfully decoded the downlink control information, performing a beam measurement during the first time interval and determining, during the first time interval, whether a wireless communication quality of the first beam pair meets the preset condition based on the beam measurement,

   **b21.)** if the wireless communication quality of the first beam pair meets the preset condition, determining, during the first time interval, that there are no downlink data intended for the terminal device and subsequently entering into the sleep state in all subsequent subframes of the DRX cycle until the end of the DRX cycle;

   **b22.)** if the wireless communication quality of the first beam pair does not meet the preset condition, determining, during the first time interval, that there are downlink data intended for the terminal device, and determining, during the first time interval, a fourth beam pair among the multiple beam pairs for the downlink control channel whose wireless communication quality meets the preset condition, reporting, during the second time interval, information indicating the fourth beam pair to the radio access network device, and subsequently monitoring, during the second active period following the second time interval, the downlink control channel by using a receive beam of the fourth beam pair for receiving the resent downlink data signal on the downlink data channel, and receiving, in the second active period, the resent downlink data signal by using the receive beam of the second beam pair, wherein the receive beam of the fourth beam pair is a new serving receive beam of the downlink control channel.

**2.** A terminal device configured to perform the method according to claim 1.

**3.** A chip, applied into a terminal device, wherein the chip comprises at least one process element and a memory element, the at least one process element is configured to execute program instructions stored in the memory element, which program instructions, when executed by the at least one process element, cause the chip to perform the method according to claim 1.

**4.** A computer-readable storage medium comprising instructions, which, when executed by a computer of a terminal device, cause the computer of the terminal device to carry out the method of claim 1.

**Patentansprüche**

**1.** Drahtloskommunikationsverfahren, das auf ein Szenario angewendet wird, in dem eine Mehrstrahlkommunikationstechnologie verwendet wird, und durch eine Endvorrichtung durchgeführt wird, das Verfahren umfassend die folgenden Verfahrensschritte, die während eines einzigen Zyklus eines diskontinuierlichen Empfangs, DRX-Zyklus, durchgeführt werden:

   **a.)** während eines ersten aktiven Zeitraums des DRX-Zyklus, Empfangen (S 401), durch Verwenden eines Empfangsstrahls eines ersten Strahlpaars aus mehreren Strahlpaaren, eines Downlink-Steuersignals auf einem Downlink-Steuerkanal von einer Funkzugangsnetzwerkvorrichtung, wobei der Empfangsstrahl des ersten Strahlpaars ein aktueller bedienender Empfangsstrahl des Downlink-Steuerkanals ist, wobei der erste aktive Zeitraum eine erste Einschaltdauer des DRX-Zyklus ist, wobei jedes Strahlpaar aus den mehreren Strahlpaaren durch einen Sendestrahl der Zugangsnetzwerkvorrichtung und einen Empfangsstrahl der Endvorrichtung gebildet ist;

**b.)** während des ersten aktiven Zeitraums des DRX-Zyklus, Versuchen (S 402), das Downlink-Steuersignal erfolgreich zu decodieren;

**b1.)** wenn die Endvorrichtung die Downlink-Steuerinformationen erfolgreich decodiert hat, Bestimmen, dass für die Endvorrichtung bestimmte Downlink-Daten vorhanden sind, und, während des ersten aktiven Zeitraums des DRX-Zyklus, Empfangen, durch Verwenden eines Empfangsstrahls eines zweiten Strahlpaars aus den mehreren Strahlpaaren, eines Downlink-Datensignals, umfassend die Downlink-Daten auf einem Downlink-Datenkanal, wobei der Downlink-Datenkanal durch die Downlink-Steuerinformationen angegeben wird und der Empfangsstrahl des zweiten Strahlpaars ein aktueller bedienender Empfangsstrahl des Downlink-Datenkanals ist, und Versuchen, das empfangene Downlink-Datensignal während des ersten aktiven Zeitraums des DRX-Zyklus erfolgreich zu decodieren;

**b11.)** wenn die Endvorrichtung das Downlink-Datensignal erfolgreich decodiert hat, Wechseln, in allen nachfolgenden Unterrahmen anschließend an den ersten aktiven Zeitraum des DRX-Zyklus, in einen Standby-Zustand bis zum Ende des DRX-Zyklus;

**b12.)** wenn die Endvorrichtung das Downlink-Datensignal nicht erfolgreich decodiert hat, Durchführen einer Strahlmessung während eines ersten Zeitintervalls nach dem ersten aktiven Zeitraum, und Bestimmen, während des ersten Zeitintervalls, ob eine Drahtloskommunikationsqualität des zweiten Strahlpaars eine vorgegebene Bedingung erfüllt,

▪ wenn die Drahtloskommunikationsqualität des zweiten Strahlpaars die vorgegebene Bedingung erfüllt, Überwachen, während eines zweiten aktiven Zeitraums nach dem ersten Zeitintervall, des Downlink-Steuerkanals durch Verwenden des Empfangsstrahls des ersten Strahlpaars zum Empfangen, während des zweiten aktiven Zeitraums, des zurückgesendeten Downlink-Datensignals auf dem Downlink-Datenkanal und Empfangen, während des zweiten aktiven Zeitraums, des zurückgesendeten Downlink-Datensignals durch Verwenden des Empfangsstrahls des zweiten Strahlpaars, wobei der zweite aktive Zeitraum eine zweite Einschaltdauer des DRX-Zyklus ist;

▪ wenn die Drahtloskommunikationsqualität des zweiten Strahlpaars die vorgegebene Bedingung nicht erfüllt, Bestimmen, während des ersten Zeitintervalls, eines dritten Strahlpaars aus den mehreren Strahlpaaren für den Downlink-Datenkanal, dessen Drahtloskommunikationsqualität die vorgegebene Bedingung erfüllt, Berichten, während eines zweiten Zeitintervalls nach dem ersten Zeitintervall, von Informationen, die das dritte Strahlpaar angeben, an die Funkzugangsnetzwerkvorrichtung, und anschließend Überwachen, während des zweiten aktiven Zeitraums nach dem zweiten Zeitintervall, des Downlink-Steuerkanals durch Verwenden des Empfangsstrahls des ersten Strahlpaars zum Empfangen des zurückgesendeten Downlink-Datensignals auf dem Downlink-Datenkanal und Empfangen, während des zweiten aktiven Zeitraums, des zurückgesendeten Downlink-Datensignals durch Verwenden eines Empfangsstrahls des dritten Strahlpaars, wobei der Empfangsstrahl des dritten Strahlpaars ein neuer bedienender Empfangsstrahl des Downlink-Datenkanals ist;

**b2.)** wenn die Endvorrichtung die Downlink-Steuerinformationen nicht erfolgreich decodiert hat, Durchführen einer Strahlmessung während des ersten Zeitintervalls und Bestimmen, während des ersten Zeitintervalls, ob eine Drahtloskommunikationsqualität des ersten Strahlpaars die vorgegebene Bedingung erfüllt, basierend auf der Strahlmessung,

> **b21.)** wenn die Drahtloskommunikationsqualität des ersten Strahlpaars die vorgegebene Bedingung erfüllt, Bestimmen, während des ersten Zeitintervalls, dass keine für die Endvorrichtung bestimmten Downlink-Daten vorhanden sind, und anschließend Wechseln in den Standby-Zustand in allen nachfolgenden Unterrahmen des DRX-Zyklus bis zum Ende des DRX-Zyklus;
> **b22.)** wenn die Drahtloskommunikationsqualität des ersten Strahlpaars die vorgegebene Bedingung nicht erfüllt, Bestimmen, während des ersten Zeitintervalls, dass für die Endvorrichtung bestimmte Downlink-Daten vorhanden sind, und Bestimmen, während des ersten Zeitintervalls, eines vierten Strahlpaars aus den mehreren Strahlpaaren für den Downlink-Steuerkanal, dessen Drahtloskommunikationsqualität die vorgegebene Bedingung erfüllt, Berichten, während des zweiten Zeitintervalls, von Informationen, die das vierte Strahlpaar angeben, an die Funkzugangsnetzwerkvorrichtung und anschließend Überwachen, während des zweiten aktiven Zeitraums nach dem zweiten Zeitintervall, des Downlink-Steuerkanals durch Verwenden eines Empfangsstrahls des vierten Strahlpaars zum Empfangen des zurückgesendeten Downlink-Datensignals auf dem Downlink-Datenkanal und Empfangen, im zweiten aktiven Zeitraum, des zurückgesendeten Downlink-Datensignals durch Verwenden des Empfangsstrahls des zweiten Strahlpaars, wobei der Empfangsstrahl des vierten Strahlpaars ein neuer bedienender Empfangsstrahl des Downlink-Steuerkanals ist.

2. Endvorrichtung, die zum Durchführen des Verfahrens nach Anspruch 1 ausgelegt ist.

3. Chip, der in eine Endvorrichtung angebracht wird, wobei der Chip zumindest ein Prozesselement und ein Speicherelement umfasst, wobei das zumindest eine Prozesselement zum Ausführen von Programmanweisungen, die im Speicherelement gespeichert sind, ausgelegt ist, wobei die Programmanweisungen, bei Ausführung durch das zumindest eine Prozesselement, den Chip veranlassen, das Verfahren nach Anspruch 1 durchzuführen.

4. Computerlesbares Speichermedium, umfassend Anweisungen, die, bei Ausführung durch einen Computer einer Endvorrichtung, den Computer der Endvorrichtung veranlassen, das Verfahren nach Anspruch 1 auszuführen.

## Revendications

1. Procédé de communication sans fil, appliqué à un scénario où une technologie de communication multifaisceau est utilisée et réalisé par un dispositif terminal, le procédé comprenant les étapes de procédé suivantes réalisées durant un unique cycle de réception discontinue (DRX) :

> a.) durant une première période active du cycle DRX, recevoir (S 401), au moyen d'un faisceau de réception d'une première paire de faisceaux parmi de multiples paires de faisceaux, un signal de commande en liaison descendante sur un canal de commande en liaison descendante en provenance d'un dispositif de réseau d'accès radio, le faisceau de réception de la première paire de faisceaux étant un faisceau de réception de desserte actuel du canal de commande en liaison descendante, la première période active étant une première durée active du cycle DRX, chaque paire de faisceaux parmi les multiples paires de faisceaux étant formée par un faisceau d'émission du dispositif de réseau d'accès et par un faisceau de réception du dispositif terminal ;
> b.) durant la première période active du cycle DRX, essayer (S 402) de décoder de manière satisfaisante le signal de commande en liaison descendante ;

> > b1.) si le dispositif terminal a décodé de manière satisfaisante l'information de commande en liaison descendante, déterminer qu'il y a des données en liaison descendante destinées au dispositif terminal et, durant la première période active du cycle DRX, recevoir, au moyen d'un faisceau de réception d'une deuxième paire de faisceaux parmi les multiples paires de faisceaux, un signal de données en liaison descendante qui comprend les données en liaison descendante sur un canal de données en liaison descendante, le canal de données en liaison descendante étant indiqué par l'information de commande en liaison descendante et le faisceau de réception de la deuxième paire de faisceaux étant un faisceau de réception de desserte actuel du canal de données en liaison descendante, et essayer de décoder de manière satisfaisante le signal de données en liaison descendante reçu durant la première période active du cycle DRX ;

b11.) si le dispositif terminal a décodé de manière satisfaisante le signal de données en liaison descendante, entrer dans toutes les sous-trames postérieures, postérieures à la première période active du cycle DRX, dans un état de veille jusqu'à la fin du cycle DRX;

b12.) si le terminal n'a pas décodé de manière satisfaisante le signal de données en liaison descendante, réaliser une mesure de faisceau durant un premier intervalle de temps après la première période active et déterminer, durant le premier intervalle de temps, si une qualité de communication sans fil de la deuxième paire de faisceaux satisfait à une condition prédéfinie,

■ si la qualité de communication sans fil de la deuxième paire de faisceaux satisfait à la condition prédéfinie, surveiller, durant une seconde période active qui suit le premier intervalle de temps, le canal de commande en liaison descendante au moyen du faisceau de réception de la première paire de faisceaux pour recevoir, durant la seconde période active, le signal de données en liaison descendante renvoyé sur le canal de données en liaison descendante et recevoir, durant la seconde période active, le signal de données en liaison descendante renvoyé au moyen du faisceau de réception de la deuxième paire de faisceaux, la seconde période active étant une seconde durée active du cycle DRX ;

■ si la qualité de communication sans fil de la deuxième paire de faisceaux ne satisfait pas à la condition prédéfinie, déterminer, durant le premier intervalle de temps, une troisième paire de faisceaux parmi les multiples paires de faisceaux pour le canal de données en liaison descendante dont la qualité de communication sans fil satisfait à la condition prédéfinie, signaler, durant un second intervalle de temps qui suit le premier intervalle de temps, une information qui indique la troisième paire de faisceaux au dispositif de réseau d'accès radio, puis

surveiller, durant la seconde période active qui suit le second intervalle de temps, le canal de commande en liaison descendante au moyen du faisceau de réception de la première paire de faisceaux pour recevoir le signal de données en liaison descendante renvoyé sur le canal de données en liaison descendante, et recevoir, durant la seconde période active, le signal de données en liaison descendante renvoyé au moyen d'un faisceau de réception de la troisième paire de faisceaux, le faisceau de réception de la troisième paire de faisceaux étant un nouveau faisceau de réception de desserte du canal de données en liaison descendante ;

b2.) si le dispositif terminal n'a pas décodé de manière satisfaisante l'information de commande en liaison descendante, réaliser une mesure de faisceau durant le premier intervalle de temps et déterminer, durant le premier intervalle de temps, si une qualité de communication sans fil de la première paire de faisceaux satisfait à la condition prédéfinie sur la base de la mesure de faisceau,

b21.) si la qualité de communication sans fil de la première paire de faisceaux satisfait à la condition prédéfinie, déterminer, durant le premier intervalle de temps, qu'il n'y a pas de données en liaison descendante destinées au dispositif terminal, puis entrer dans l'état de veille dans toutes les sous-trames postérieures du cycle DRX jusqu'à la fin du cycle DRX ;

b22.) si la qualité de communication sans fil de la première paire de faisceaux satisfait ne satisfait pas à la condition prédéfinie, déterminer, durant le premier intervalle de temps, qu'il y a des données en liaison descendante destinées au dispositif terminal et déterminer, durant le premier intervalle de temps, une quatrième paire de faisceaux parmi les multiples paires de faisceaux pour le canal de commande en liaison descendante dont la qualité de communication sans fil satisfait à la condition prédéfinie, signaler, durant le second intervalle de temps, une information qui indique la quatrième paire de faisceaux au dispositif de réseau d'accès radio, puis surveiller, durant la seconde période active qui suit le second intervalle de temps, le canal de commande en liaison descendante au moyen d'un faisceau de réception de la quatrième paire de faisceaux pour recevoir le signal de données en liaison descendante renvoyé sur le canal de données en liaison descendante, et recevoir, durant la seconde période active, le signal de données en liaison descendante renvoyé au moyen du faisceau de réception de la deuxième paire de faisceaux, le faisceau de réception de la quatrième paire de faisceaux étant un nouveau faisceau de réception de desserte du canal de commande en liaison descendante.

2. Dispositif terminal configuré pour réaliser le procédé selon la revendication 1.

3. Puce, appliquée dans un dispositif terminal, la puce comprenant au moins un élément de traitement et un élément mémoire, l'au moins un élément de traitement étant configuré pour exécuter des instructions de programme stockées dans l'élément mémoire, lesdites instructions de programme, lorsqu'elles sont exécutées par l'au moins un élément de traitement, amenant la puce à réaliser le procédé selon la revendication 1.

4. Support de stockage lisible par ordinateur, comprenant des instructions qui, lorsqu'elles sont exécutées par un ordinateur d'un dispositif terminal, amènent l'ordinateur du dispositif terminal à réaliser le procédé selon la revendication 1.

EP 3 528 553 B1

FIG. 1

FIG. 2

FIG. 3

```
401 ──┐   ┌─────────────────────────┐
       │   │  UE receives a downlink │
       │   │      control signal     │
           └─────────────────────────┘
                        │
                        ▼
402 ──┐   ◇─────────────────────────◇
       │   │    Does the UE perform   │          No
       │    ◇  decoding successfully? ◇──────────────┐
            ◇─────────────────────────◇              │
                        │                             │
                       Yes                            │
                        │                             │        404
                        ▼                             ▼      ──┘
           ┌─────────────────────────┐   ┌─────────────────────────┐
403 ──┐    │                         │   │  The UE performs beam    │
       │   │     The UE sleeps       │   │  measurement, to find a  │
           │                         │   │    matched beam pair     │
           └─────────────────────────┘   └─────────────────────────┘
```

FIG. 4

FIG. 5

Data

| Active period Decoding succeeds | Sleep | Sleep | Sleep | Sleep |
|---|---|---|---|---|

Data

| Active period Decoding fails | Beam measurement (when beams are not matched) | Feedback | Sleep |
|---|---|---|---|

| Active period | Beam measurement (when beams are not matched) | Feedback | Sleep |
|---|---|---|---|

| Active period | Beam measurement (when beams are matched) | Sleep | Sleep | Sleep |
|---|---|---|---|---|

FIG. 6

701 — UE determines matched service beams before a DRX active period

702 — Is a data indication signal detected through listening?

Yes

703 — The UE listens to a data signal

No 704

The UE sleeps

FIG. 7

FIG. 8

FIG. 9

EP 3 528 553 B1

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HUAWEI.** UE power saving mechanism in High Frequency. *3GPP draft,* 09 October 2016